Europäisches Patentamt

European Patent Office

Office européen des brevets

(19)

(11) **EP 0 723 371 B1**

(12) **FASCICULE DE BREVET EUROPEEN**

(45) Date de publication et mention
de la délivrance du brevet:
**17.04.2002 Bulletin 2002/16**

(51) Int Cl.⁷: **H04N 7/16**, H04N 7/167

(21) Numéro de dépôt: **96400070.7**

(22) Date de dépôt: **11.01.1996**

(54) **Procédé de protection des messages de gestion d'un système de controle d'accès et dispositif pour sa mise en oeuvre**

Vorrichtung und Verfahren zum Schutz von Steuerbefehlen in einem System mit bedingtem Zugriff

Method and apparatus for protecting control signals in a conditional access system

(84) Etats contractants désignés:
**DE FR GB IT**

(30) Priorité: **17.01.1995 FR 9500464**

(43) Date de publication de la demande:
**24.07.1996 Bulletin 1996/30**

(73) Titulaire: **THOMSON multimedia**
**92648 Boulogne Cédex (FR)**

(72) Inventeur: **De Vito, Mario**
**F-92050 Paris la Defense (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**EP-A- 0 428 252          EP-A- 0 461 029**
**DE-C- 3 802 612          GB-A- 2 214 677**

• **CABLE TV SESSIONS, MONTREUX, JUNE 10 - 15, 1993, no. SYMP. 18, 11 Juin 1993 POSTES;TELEPHONES ET TELEGRAPHES SUISSES, pages 761-769, XP 000379391 VIGARIE J P 'A DEVICE FOR REAL-TIME MODIFICATION OF ACCESS CONDITIONS IN A D2-MAC/PACKET EUROCRYPT SIGNAL: THE TRANSCONTROLLER'**

## Description

La présente invention concerne un procédé de protection des messages de gestion d'un système de contrôle d'accès ainsi qu'un dispositif pour la mise en oeuvre de ce procédé. Les systèmes de contrôle d'accès ou systèmes à accès conditionnels sont bien connus dans tous les systèmes dit sécurisés et notamment dans le domaine de la télévision à péage. Ces systèmes sont utilisés lorsqu'un prestataire de service veut être sûr que des programmes ou des données de service diffusés sont disponibles seulement pour les utilisateurs qui ont rempli certaines conditions, telles que le paiement. Dans ce cas, le prestataire de service désire contrôler l'accès à son service de manière à ne le délivrer qu'à ses abonnés. Le prestataire de service distribue donc à chacun des abonnés un terminal capable de capter le service et aussi des droits d'accès. En général, les droits d'accès sont stockés dans une carte à mémoire ou carte à puce dotée d'un microprocesseur pouvant réalisé un certain nombre de fonctions, notamment des fonctions cryptographiques.

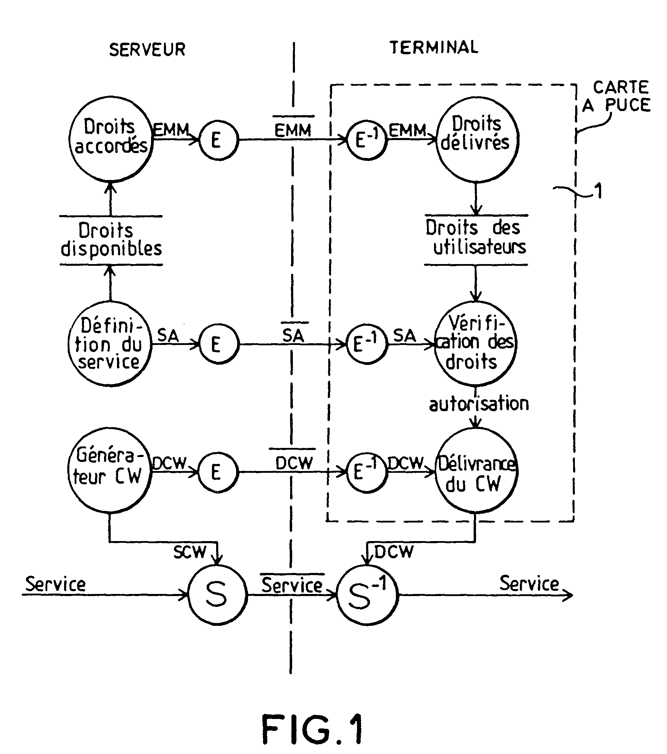

Comme représenté sur la figure 1, les systèmes de contrôle d'accès actuellement utilisés sont constitués le plus souvent de deux parties, une partie embrouillage et une partie contrôle. La partie embrouillage est la partie qui traite les signaux correspondant aux services rendus, par exemple les signaux vidéo, les signaux audio ou d'autres données et la partie contrôle est, en général, la partie qui possède des signaux "clés" nécessaires pour débloquer la partie embrouillage.

Sur la figure 1, on a représenté schématiquement le flux des données principales dans un système à contrôle d'accès. Sur cette figure, la partie gauche représente les opérations réalisées au niveau du serveur tandis que la partie droite représente les opérations réalisées au niveau du terminal chez l'utilisateur. La référence 1 représente les opérations réalisées au niveau même de la carte à puce qui vient s'insérer dans le terminal.

Comme représenté sur la figure 1, les signaux correspondant aux services délivrés par le prestataire de service et référencé Service sont tout d'abord envoyés dans un dispositif d'embrouillage référencé S où ils sont embrouillés de manière connue. Le dispositif d'embrouillage peut être, par exemple, un générateur de séquences binaires pseudo-aléatoires dont les signaux en sortie sont rendus imprévisibles en utilisant un mot de contrôle référencé SCW. Comme représenté sur la figure 1, le mot de contrôle SCW est issu d'un circuit de génération de mots de contrôle CW. Il est aussi possible d'utiliser un mot de contrôle local qui, dans ce cas, serait un mot invariable. Les signaux correspondant au service sont donc émis de manière embrouillée ($\overline{service}$) vers un terminal où ils sont désembrouillés dans un désembrouilleur $S^{-1}$ en utilisant le mot de contrôle déchiffré issu du circuit de délivrance du CW. En effet, lorsque l'on n'utilise pas un mot de contrôle local mais un mot de contrôle généré par un système spécifique, comme représenté sur la figure 1, le mot de contrôlé DCW issu du circuit de génération CW est envoyé sur un système de chiffrement référencé E, puis il est émis sous forme chiffrée ($\overline{DCW}$) vers le terminal, plus particulièrement dans un circuit de déchiffrement $E^{-1}$ contenu dans la carte à puce qui permet de le déchiffrer et de l'envoyer sur un circuit de délivrance du CW qui, à son tour, l'enverra sur le circuit de désembrouillage $S^{-1}$ lors de la réception d'une autorisation donnée par le système de vérification des droits qui fait partie du système de chiffrement.

D'autre part, comme représenté sur la figure 1, au niveau du serveur, est stocké un certain nombre de données permettant de gérer l'accès au système. Il s'agit en fait de la définition du service. Dans la partie référencée définition du service, on trouve donc des données définissant l'ensemble des droits disponibles ou droits d'accès ainsi que les attributs du service. Parmi l'ensemble des droits disponibles est défini un certain nombre de droits accordés à l'utilisateur. Ces droits accordés donnent lieu à des messages de gestion référencés EMM. Ces messages de gestion sont chiffrés au niveau du serveur au moyen du système de chiffrement référencé E et une fois chiffrés, ces messages ($\overline{EMM}$) sont envoyés vers le terminal où ils sont déchiffrés dans le circuit $E^{-1}$ pour obtenir les droits délivrés de manière à pouvoir mettre à jour les droits de l'abonné intéressé. Dans ce cas, chaque abonné est reconnu par une adresse numérique infalsifiable rangée dans sa carte à puce. Contrairement aux messages SA et DCW synchrones du service diffusé, les messages EMM sont totalement asynchrones et apparaissent en fonction des mises à jour des droits d'un ou plusieurs abonnés. Les messages de gestion EMM contiennent l'adresse de l'abonné concerné. Seuls les droits de l'abonné dont l'adresse de carte correspond à celle du message EMM sont mis à jour. D'autre part, les attributs du service SA sont transmis de manière synchrone avec le service. Ils sont protégés contre la falsification en utilisant par exemple un chiffreur E. La carte à puce reçoit ces messages, les déchiffre en utilisant sa clé secrète et les compare aux droits stockés. Si ceux-ci correspondent, le mécanisme de délivrance de la clé de désembrouillage DCW est autorisé. Généralement, $\overline{SA}$ et $\overline{DCW}$ sont groupés au sein d'un unique message appelé ECM (message d'accès). Un message d'accès ECM permet de recréer le mot de contrôle CW ou clé correspondant à une période élémentaire. Une période élémentaire est la période de validité du mot de contrôle, c'est-à-dire celle séparant deux ECM. Les messages d'accès et les messages de gestion circulent sur le canal des données en étant multiplexés. Un système de ce type a été décrit, par exemple, dans le standard « MAC packet family ».

Actuellement, les systèmes de contrôle d'accès se divisent en deux familles :

- selon un premier système, les droits de tous les abonnés ne sont valables que pendant un temps limité, avant la fin duquel ils sont rafraîchis, la référence du temps étant transmise dans les messages ECM ;
- selon un second système, seules les mises à jour de droits d'abonnés ayant évoluées sont effectuées.

Le premier système impose un débit relativement important comparé au second car les droits devenant spontanément caduques nécessitent d'être rafraîchis. Au contraire, lorsque seules les modifications de droits génèrent des messages de gestion, le débit de messages EMM devient faible mais un mauvais payeur peut échapper à ceux d'entre eux qui vont dégrader ses droits actuels en tentant de les filtrer.

La présente invention a pour but de remédier aux problèmes liés aux messages de gestion diminuant les droits d'un utilisateur et diffusés dans un système de contrôle d'accès à rafraîchissement partiel des droits.

Ainsi, la présente invention a pour objet un procédé de gestion des messages de gestion d'autorisation d'un système de contrôle d'accès dans lequel les messages de gestion d'autorisation comportent des messages de contrôle d'accès (ECM) comprenant des données de contrôle et des messages de gestion (EMM) déterminant des droits spécifiques à un utilisateur insérés entre deux messages de contrôle d'accès (ECM) définissant une période élémentaire, caractérisé en ce qu'il comporte la division des messages de gestion en :

- messages de gestion augmentant les droits de l'utilisateur appelés EMM-positifs, ces messages de gestion positifs étant envoyés vers l'utilisateur à une première vitesse à travers un moyen permettant de ne transmettre à l'utilisateur que les messages qui lui sont adressés, et en
- messages de gestion diminuant les droits de l'utilisateur appelés EMM-négatifs, ces messages de gestion négatifs étant envoyés vers l'utilisateur de manière sécurisée à une seconde vitesse inférieure à la première vitesse.

D'autres caractéristiques et avantages de la présente invention apparaîtront à la lecture de la description faite ci-après d'au moins un mode de réalisation préférentiel, cette description étant faite avec référence aux dessins ci-annexés dans lesquels :

- la figure 1 déjà décrite représente schématiquement le flux des données dans un système à contrôle d'accès,
- la figure 2 représente schématiquement les principaux éléments se trouvant au niveau d'un serveur pour la mise en oeuvre du procédé conforme à la présente invention,
- la figure 3 représente de manière détaillée un exemple de création des messages protégés conformément à l'invention, et
- la figure 4 représente schématiquement un décodeur permettant la mise en oeuvre du procédé conforme à la présente invention.

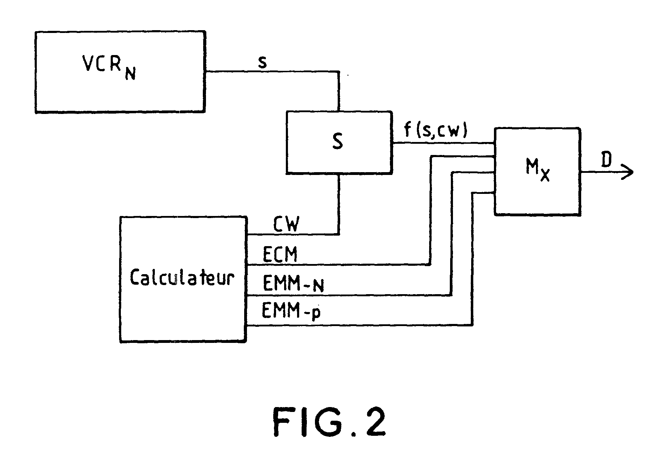

Comme représenté sur la figure 2, les données fournies par le prestataire de service peuvent être par exemple un film qui est délivré par un magnétoscope numérique référencé $VCR_N$ sous forme de signaux $\underline{s}$. Les signaux $\underline{s}$ sont envoyés sur un dispositif d'embrouillage S qui fonctionne sous contrôle d'un mot de contrôle CW qui peut être obtenu, de manière connue, à partir d'un calculateur ou à partir de circuits plus spécifiques tels que des générateurs de fréquence binaire pseudo-aléatoire ou similaire. En sortie du dispositif d'embrouillage S, on obtient un signal embrouillé qui est une fonction de f(s,CW).

D'autre part, de manière connue, pour obtenir un accès conditionnel aux informations embrouillées, le prestataire de service émet aussi un certain nombre de messages. Ces messages sont constitués principalement par des messages d'accès référencés ECM, ces messages d'accès permettant notamment de recréer le mot de contrôle CW ou clé correspondant à une période élementaire du service embrouillé. Les messages d'accès ECM comportent aussi des données relatives aux attributs du service lui-même. Le prestataire de service émet aussi des messages de gestion ou EMM qui permettent de modifier les droits d'un groupe d'utilisateurs.

Conformément à la présente invention, les messages de gestion EMM ont été divisés en deux types de messages, à savoir les messages de gestion négatifs référencés EMM-N qui entraînent une diminution des droits de l'abonné, par exemple une suppression de l'abonné lorsque celui-ci n'a pas payé, ou l'accès à un nombre inférieur de services suite à un changement d'abonnement, et les messages de gestion positifs référencés EMM-P qui entraînent une augmentation des droits. Dans ce cas, il est important que les EMM-négatifs ne puissent pas être piratés.

Comme représenté sur la figure 2, l'ensemble des données constitué par les signaux F(s,CW), ECM, EMM-N, EMM-P, sont envoyés sur un multiplexeur référencé Mx, le multiplexeur donnant en sortie les données D qui sont émises vers l'utilisateur.

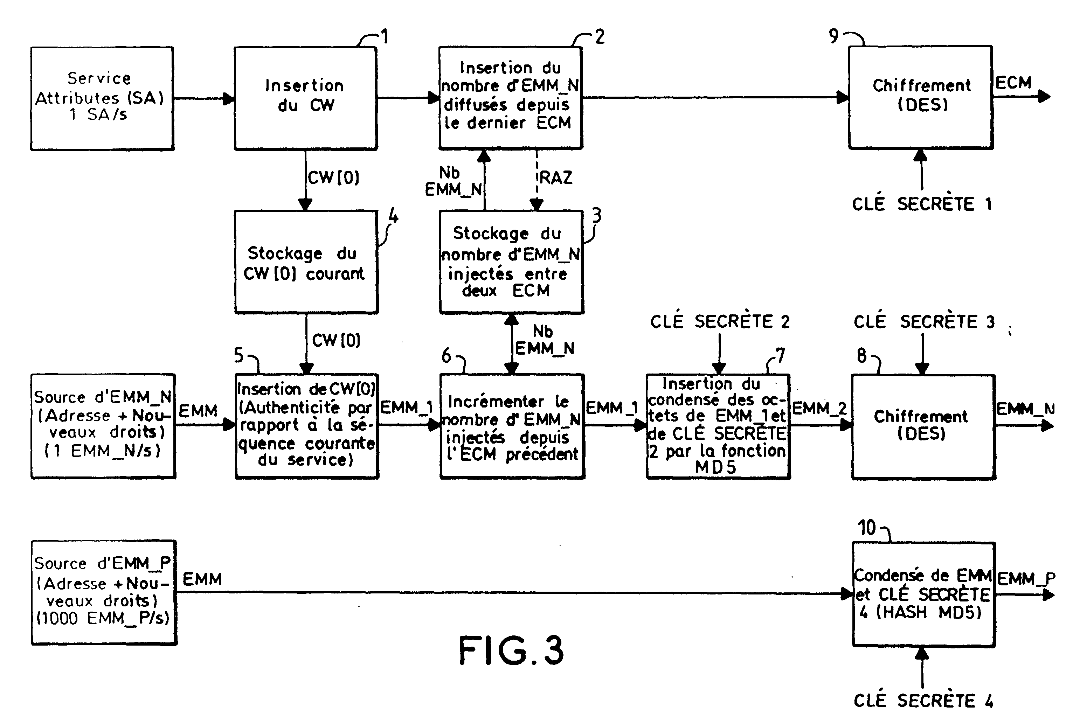

Conformément à la présente invention, il est important que les messages de gestion négatifs EMM-N soient transmis dans un canal virtuel à bas débit assurant à la fois confidentialité, authenticité, authenticité par rapport à la séquence du service en cours, et présence en nombres voulus de messages de gestion négatifs dans une période élémentaire. La confidentialité des messages interdit à toute personne la possibilité de reconnaître l'adresse de la carte à puce vers laquelle est adressé le message. Cette confidentialité est obtenue, par exemple, en réalisant un chiffrement symétrique à clé secrète du message en utilisant des systèmes de chiffrement connus, tel que le système DES pour "Data Enscription Standard" ou tout autre chiffreur à clé secrète. L'authenticité garantit l'impossibilité de modifier un message de gestion ou de le remplacer par un autre. Cette authenticité pour les messages de gestion négatifs EMM-N est assurée par le calcul d'un condensé par une fonction de hachage cryptographique paramétrée par un secret partagé par la carte à puce et l'émetteur, de telle sorte qu'en cas de modification du message de gestion, on obtienne une modification du résultat et la détection de l'erreur par la carte à puce. L'utilisation de cette fonction de hachage n'est pas nécessaire dans le cas où l'on utilise un chiffreur offrant une forte diffusion, car dans ce cas la modification d'un bit du message chiffré entraîne aussi une forte modification du message déchiffré et par la même une forte probabilité de perturbation de l'adresse de message de gestion. L'authenticité par rapport à la séquence du service en cours interdit de détacher un message EMM reconnu authentique pour le substituer à un autre message EMM diffusé pendant une autre séquence. Elle est assurée en liant le message ECM immédiatement précédent et ce message EMM-N, par exemple en insérant dans le message EMM-N l'octet de rang 0, appelé CW(0), du mot de contrôle de l'ECM précédent qui est un de ces éléments caractéristiques et variables d'une séquence à l'autre, comme cela est représenté sur la figure 3 qui sera décrite ci-après. D'autre part, le comptage des messages de gestion négatifs est réalisé à partir du dernier message d'accès ECM émis jusqu'au prochain message d'accès ECM à émettre. Le résultat du comptage est intégré dans le prochain message d'accès ECM. La carte à puce compte donc les messages de gestion négatifs à partir d'un message d'accès donné et compare le total obtenu à celui écrit dans le message d'accès suivant.

Si la carte d'un abonné détecte une anomalie d'authenticité ou de comptage, elle ne délivre pas le mot de contrôle CW permettant de désembrouiller la prochaine période élémentaire du service.

Le canal virtuel à haut débit ne transporte en fait que les messages de gestion positifs, à savoir ceux augmentant les droits.

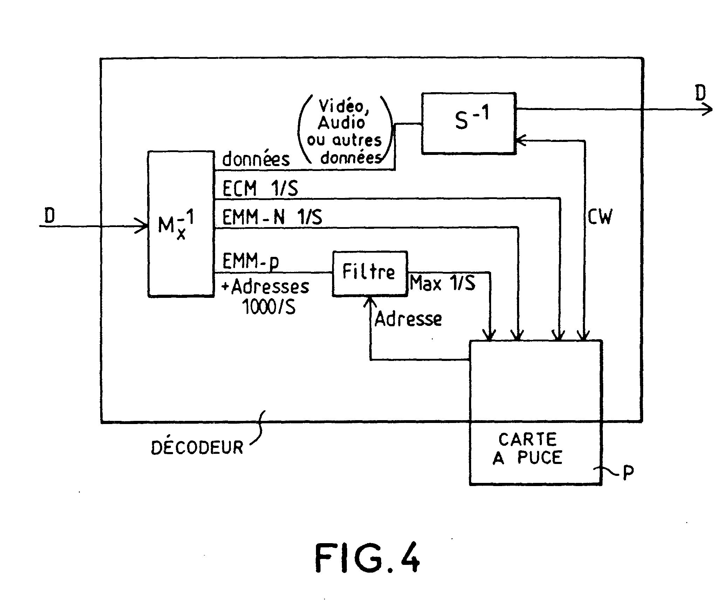

Comme représenté sur la figure 4, qui concerne le décodeur, dans ce cas un filtre non sécurisé est alors monté en avant de la carte à puce de manière à éliminer les messages de gestion positifs EMM-P qui ne lui sont pas adressés par comparaison entre l'adresse associée aux messages de gestion et l'adresse fournie par la carte à puce. De ce fait, au moins l'adresse des messages de gestion positifs doit être compréhensible par le filtre. Pour éviter toute modification par un pirate, le canal véhiculant les messages EMM-P doit leur assurer l'authenticité. Celle-ci est obtenue par exemple par le calcul d'un condensé du message EMM-P, mélangé à un secret partagé par la carte et l'émetteur, à l'aide d'une fonction de hachage cryptographique telle que la fonction MD5 connue, comme cela est représenté sur la figure 3.

On décrira maintenant en se référant à la figure 3, un exemple de création des différents messages protégés, conformément au procédé de la présente invention.

Comme déjà décrit ci-dessus, les signaux envoyés par le prestataire de service comprennent, entre autres, des messages attributs référencés SA et émis à la fréquence de 1SA/s, des messages de gestion négatifs EMM-N comportant des données relatives à l'adresse et aux nouveaux droits, ces messages étant émis 1EMM-N/s et des messages de gestion positifs EMM-P comportant des données relatives à l'adresse et aux nouveaux droits, ces messages étant émis avec 1000EMM-P/s. Comme repésenté sur la figure 3, les attributs SA sont envoyés sur un circuit permettant l'insertion du mot de contrôle CW ; le message obtenu est alors envoyé sur un nouveau circuit 2 réalisant l'insertion du nombre de message EMM-N diffusés depuis l'envoi du dernier message d'accès ECM. Cette information est obtenue depuis un circuit 3 de stockage du nombre de messages EMN-N envoyés entre deux messages d'accès ECM. Ce circuit de stockage est lui-même connecté à un circuit d'incrémentation 6 qui sera décrit ultérieurement. D'autre part, le circuit d'insertion 2 émet un message de remise à zéro du circuit de stockage 3 à chaque opération. Le message issu du circuit 2 est envoyé sur un circuit de chiffrement 9 qui réalise de manière connue le chiffrement à l'aide d'une première clé secrète, ce qui donne en sortie un message d'accès chiffré ECM.

D'autre part, la source de messages de gestion négatifs envoie un message EMM vers un circuit 5 réalisant l'insertion la fraction CW[0] du mot de contrôle courant qui a été stocké dans le circuit de stockage 4. Cette opération a pour but d'authentifier le message par rapport à la séquence courante du service. Le message issu du circuit référencé EMM-1 est envoyé sur un circuit 6 qui réalise l'incrémentation du nombre de messages EMM-N injectés depuis le message de contrôle d'accès précédent ECM. Ensuite, le message EMM-1 est envoyé sur un circuit 7 qui réalise le calcul du condensé des octets du message EMM-1 et d'une deuxième clé secrète par une fonction de hachage connue telle que la fonction référencée MD5 et décrite dans le manuel intitulé "BSAFE, A cryptographic toolkit" de RSA Data Security lnc Version 2.0. Le message EMM-2 issu du circuit 7 est envoyé sur un circuit de chiffrement qui réalise le chiffrement à l'aide d'une troisième clé secrète de manière à obtenir en sortie les messages EMM-N. De plus, la source de messages EMM-P envoie les messages EMM sur un circuit 10 réalisant le calcul du condensé des octets du message EMM et d'une quatrième clé secrète par la fonction de hachage MD5 décrite ci-dessus, de manière à obtenir les messages EMM-P.

Comme représenté sur la figure 4, les données multiplexées D envoyées par le serveur arrivent au niveau du décodeur sur un démultiplexeur $M^{-1}_x$. En sortie

du démultiplexeur, on obtient les données correspondant au service demandé sous forme embrouillée. Ces données sont envoyées sur un désembrouilleur S$^{-1}$ qui, lorsqu'il reçoit un mot de contrôle CW de la carte à puce, donne les informations s correspondant au service tels que les signaux correspondant aux films commandés. En sortie du démultiplexeur on obtient aussi les messages d'accès ECM émis à un débit de 1/S, les messages de gestion négatifs EMM-N émis aussi selon un débit de 1/S, à savoir à faible débit, et les messages de gestion positifs EMM-P comportant une adresse filtrable qui sont émis à haut débit et qui sont envoyés sur le filtre de manière à ne transmettre vers la carte à puce que les messages de gestion comportant la bonne adresse à un faible débit. Par faible débit, on entend un débit permettant à la carte à puce de traiter les données.

**Revendications**

1. Procédé de gestion des messages de gestion d'autorisation d'un système de contrôle d'accès dans lequel les messages de gestion d'autorisation comportent des messages de contrôle d'accès (ECM) comprenant des données de contrôle et des messages de gestion (EMM) déterminant des droits spécifiques à un utilisateur insérés entre deux messages de contrôle d'accès (ECM) définissant une période élémentaire, **caractérisé en ce qu'**il comporte la division des messages de gestion en :

   - messages de gestion augmentant les droits de l'utilisateur appelés EMM-positifs, ces messages de gestion positifs étant envoyés vers l'utilisateur à une première vitesse à travers un moyen permettant de ne transmettre à l'utilisateur que les messages qui lui sont adressés,
   - messages de gestion diminuant les droits de l'utilisateur appelés EMM-négatifs, ces messages de gestion négatifs étant envoyés de manière sécurisée vers l'utilisateur à une seconde vitesse inférieure à la première vitesse.

2. Procédé selon la revendication 1, **caractérisé en ce que** les messages de gestion négatifs sont envoyés directement vers une carte à puce détenue par l'utilisateur à travers un canal virtuel à bas débit adapté aux possibilités de traitement de la carte à puce.

3. Procédé selon la revendication 3, **caractérisé en ce que** le canal virtuel assure la confidentialité, l'authenticité, l'authenticité par rapport à la période en cours ainsi que la présence selon un nombre requis des messages de gestion négatifs.

4. Procédé selon la revendication 3, **caractérisé en ce que** les données de contrôle du message de contrôle d'accès (ECM) sont utilisées pour vérifier au moins un des critères d'authenticité et de présence en nombre requis relatifs à une période élémentaire utilisé pour valider les messages de gestion négatifs.

5. Procédé selon la revendication 3, **caractérisé en ce que** les messages de gestion négatifs sont chiffrés avant d'être émis pour empêcher la reconnaissance de l'adresse de la carte à puce.

6. Procédé selon la revendication 5, **caractérisé en ce que** le chiffrement est réalisé en utilisant un dispositif de chiffrement symétrique à clé secrète.

7. Procédé selon la revendication 3, **caractérisé en ce que** l'authenticité des messages de gestion négatifs est assurée par le calcul d'un condensé par une fonction de hachage cryptographique paramétrée par un secret partagé par la carte à puce et l'émetteur.

8. Procédé selon la revendication 3, **caractérisé en ce que** les messages de gestion négatifs sont authentifiés par rapport à la période élémentaire en cours au moment de leur diffusion en y incluant un élément variable d'une séquence à l'autre constitué d'un ou plusieurs octets d'un mot de contrôle CW.

9. Procédé selon l'une quelconque des revendications précédentes, **caractérisé en ce que** les messages de gestion positifs sont transmis vers une carte à puce à travers un canal virtuel à haut débit garantissant l'authenticité des messages de gestion positifs.

10. Procédé selon l'une quelconque des revendications 1 à 9, **caractérisé en ce que** la vitesse du canal de transmission des messages de gestion positifs est de 1000 EMM-P/$_s$ et la vitesse du canal de transmission des messages de gestion négatifs est de 1 EMM-N/$_s$.

**Patentansprüche**

1. Verfahren zur Steuerung von Steuernachrichten für die Berechtigung eines Systems zur Zugriffssteuerung, in dem die Steuernachrichten für die Berechtigung Nachrichten für die Zugriffssteuerung (ECM) enthalten, die Steuerdaten und Steuernachrichten (EMM) enthalten, die die speziellen Berechtigungen für einen Benutzer bestimmen und die zwischen zwei Nachrichten für die Zugriffssteuerung (ECM) eingefügt sind, die eine Elementarperiode definieren,
   **gekennzeichnet durch**
   die Aufteilung der Steuernachrichten in.

- Steuernachrichten, die die mit EMM-positiv bezeichneten Berechtigungen des Benutzer vergrößern, wobei diese positiven Steuernachrichten zu dem Benutzer mit einer ersten Geschwindigkeit über ein Übertragungsmittel gesendet werden, das es ermöglicht, daß nur die Nachrichten zu dem Benutzer übertragen werden, die für ihn bestimmt sind,

- Steuernachrichten, die die mit EMM-negativ bezeichneten Berechtigungen des Benutzers verringern, wobei diese negativen Steuernachrichten in einer gesicherten Weise zu dem Benutzer mit einer zweiten Geschwindigkeit übertragen werden, die kleiner ist als die erste Geschwindigkeit.

2. Verfahren nach Anspruch 1, **dadurch gekennzeichnet, daß** die negativen Steuernachrichten direkt zu einer Smart Card des Benutzers über einen virtuellen Kanal mit niedriger Datenrate übertragen werden, die an die Möglichkeiten der Verarbeitung der Smart Card angepaßt ist.

3. Verfahren nach Anspruch 3, **dadurch gekennzeichnet, daß** der virtuelle Kanal die Vertraulichkeit, die Echtheit, die Echtheit bezüglich der laufenden Periode sowie die Anwesenheit der negativen Steuernachrichten entsprechend einer geforderten Anzahl gewährleistet.

4. Verfahren nach Anspruch 3, **dadurch gekennzeichnet, daß** die Steuerdaten der Nachricht für die Zugriffssteuerung (ECM) dafür benutzt werden, um wenigstens eines der Kriterien für die Echtheit und die Anwesenheit in einer geforderten Anzahl relativ zu einer Elementarperiode zu prüfen die für die Gültigkeitserklärung der negativen Steuernachrichten verwendet wird.

5. Verfahren nach Anspruch 3, **dadurch gekennzeichnet, daß** die negativen Steuernachrichten verschlüsselt werden, bevor sie für die Verhinderung der Erkennung der Adresse der Smart Card gesendet werden.

6. Verfahren nach Anspruch 5, **dadurch gekennzeichnet, daß** die Verschlüsselung dadurch erfolgt, indem eine symmetrische Verschlüsselungsvorrichtung mit einem Geheimschlüssel angewendet wird.

7. Verfahren nach Anspruch 3, **dadurch gekennzeichnet, daß** die Echtheit der negativen Steuernachrichten durch die Berechnung einer Übersicht durch eine Verschlüsselungsfunktion gewährleistet wird, die durch einen durch die Smart Card und den Sender gemeinsam benutzten Geheimschlüssel parametriert wird.

8. Verfahren nach Anspruch 3, **dadurch gekennzeichnet, daß** die negativen Steuernachrichten bezüglich der laufenden Elementarperiode im Zeitpunkt ihrer Aussendung authentifiziert werden, indem ein variables Element mit einer Folge beigefügt wird, die aus mehreren Byte eines Steuerwortes CW besteht.

9. Verfahren nach einem der vorangehenden Ansprüche, **dadurch gekennzeichnet, daß** die positiven Steuernachrichten durch eine Smart Card über einen virtuellen Kanal mit einer hohen Datenrate übertragen werden, der die Echtheit der positiven Steuernachrichten garantiert.

10. Verfahren nach einem der Ansprüche 1 bis 9, **dadurch gekennzeichnet, daß** die Geschwindigkeit des Übertragungskanals der positiven Steuernachrichten 1000 EMM-P/s und die Geschwindigkeit des Übertragungskanals für die negativen Steuernachrichten 1 EMM-N/s beträgt.

**Claims**

1. Method of protection of authorisation management messages in an access control system wherein the authorisation management messages comprise access control messages (ECM) comprising control data and management messages (EMM) determining the specific rights of a user inserted between two access control messages determining an elementary period **characterized in that** it comprises the division of the management messages into :

- management messages increasing the user rights called positive EMM, these positive management messages being sent to the user at a first rate through a means transmitting to the user only the addressed messages, and

- management messages decreasing the user rights called negative EMM, these negative management messages being sent to user in a secure manner at a second rate lower than the first rate.

2. Method according to claim 1, **characterized in that** said negative management messages are sent directly to the user's smartcard via a virtual channel operating at a data rate low enough to enable the smartcard to process said messages.

3. Method according to claim 2, **characterized in that** the virtual channel assures confidentiality, authenticity relative to the current service period and presence of negative management messages in the required number.

4. Method according to claim 3, **characterized in that** the control data of access control message (ECM) are used to check at least one of the criterias relating to authenticity and presence in the required number for an elementary service period used to validate the negative management messages.

5. Method according to claim 1, **characterized in that** said negative management messages are enciphered before being sent, so as to prevent recognition of the address of the smartcard.

6. Method according to claim 5, **characterized in that** said enciphering is performed with a symmetrical enciphering device using a secret key.

7. Method according to claim 3, **characterized in that** the authenticity of said negative management messages is assured by hashing using a cryptographic function that makes use of a secret key known to the smartcard and the sender.

8. Method according to claim 3, **characterized in that** said negative management messages are authenticated relative to the elementary period in progress at the time of their transmission by including a component in the form of one or more bytes of the control word and that is different from one sequence to the next.

9. Method according to anyone of the preceding claims, **characterized in that** said positive management messages are sent to the smartcard via a virtual channel at high rate which guarantees the authenticity of positive management .

10. Method according to any one of claims 1 to 9, **characterized in that** the frequency of the positive management messages transmission channel is of 1000 EMM-P/S and the frequency of the negative management messages transmission channel is of 1 EMM-N/S.

FIG.1

FIG.2

EP 0 723 371 B1

| | | | |
|---|---|---|---|
| Service Attributes (SA) 1 SA/s | Insertion du CW | Insertion du nombre d'EMM_N diffusés depuis le dernier ECM | Chiffrement (DES) |

Service Attributes (SA) 1 SA/s

**1** Insertion du CW

**2** Insertion du nombre d'EMM_N diffusés depuis le dernier ECM

**9** Chiffrement (DES) → ECM

CW[0]

Nb EMM_N | RAZ

**4** Stockage du CW[0] courant

**3** Stockage du nombre d'EMM_N injectés entre deux ECM

CLÉ SECRÈTE 1

CW[0]

Nb EMM_N

CLÉ SECRÈTE 2

CLÉ SECRÈTE 3

Source d'EMM_N (Adresse + Nouveaux droits) (1 EMM_N/s)

EMM →

**5** Insertion de CW[0] (Authenticité par rapport à la séquence courante du service)

EMM_1 →

**6** Incrémenter le nombre d'EMM_N injectés depuis l'ECM précédent

EMM_1 →

**7** Insertion du condensé des octets de EMM_1 et de CLÉ SECRÈTE 2 par la fonction MD5

EMM_2 →

**8** Chiffrement (DES)

→ EMM_N

Source d'EMM_P (Adresse + Nouveaux droits) (1000 EMM_P/s)

EMM →

**10** Condensé de EMM et CLÉ SECRÈTE 4 (HASH MD5)

→ EMM_P

CLÉ SECRÈTE 4

# FIG.3

FIG.4